# EUROPEAN PATENT APPLICATION

(11) **EP 2 527 597 A2**
(43) Date of publication of application: **28.11.2012**
(21) Application number: 12169166.1
(22) Date of filing: 23.05.2012
(51) Int. Cl.: F01D 5/18

(54) **Turbine blade with curved film cooling passages**

(30) Priority: 24.05.2011 US 201113114702
(71) Applicant: General Electric Company, Schenectady, NY 12345 (US)
(72) Inventor: Lacy, Benjamin Paul, Greenville, South Carolina 29615 (US); Butler, Jesse Blair, Greenville, South Carolina 29615 (US)
(74) Representative: Cleary, Fidelma

(57) **Abstract**

A turbine component comprises an airfoil (106) having a base (122) and a tip (124) disposed opposite the base. The airfoil (106) further includes a pressure side surface (126) and a suction side surface (128) extending between a leading edge (130) and a trailing edge (132). An airfoil circuit (134) is at least partially disposed within the airfoil (106) and is configured to supply a medium through the airfoil (106). The turbine component also includes a curved passage (102) defined in the airfoil (106) so as to be in flow communication with the airfoil circuit (134). Additionally, an outlet (104) is defined through the pressure side surface (126) or the suction side surface (128) of the airfoil (106). The outlet (104) is in flow communication with the curved passage (102) and has a cross-sectional area that is greater than a cross-sectional area of the curved passage (102).

## Description

### FIELD OF THE INVENTION

The present subject matter relates generally to turbine components and, more particularly, to a turbine component having a plurality of curved passages for supplying a medium through an airfoil of the component and one or more corresponding shaped outlets for supplying the medium to a surface of the component's airfoil.

### BACKGROUND OF THE INVENTION

In a gas turbine, hot gases of combustion flow from an annular array of combustors through a transition piece for flow along an annular hot gas path. Turbine stages are typically disposed along the hot gas path such that the hot gases of combustion flow from the transition piece through first-stage nozzles and buckets and through the nozzles and buckets of follow-on turbine stages. The turbine buckets may be secured to a plurality of turbine wheels comprising the turbine rotor, with each turbine wheel being mounted to the rotor shaft for rotation therewith.

A turbine bucket generally includes an airfoil extending radially outwardly from a substantially planar platform and a hollow shank portion extending radially inwardly from the platform. The shank portion may include a dovetail or other means to secure the bucket to a turbine wheel of the turbine rotor. In general, during operation of a gas turbine, the hot gases of combustion flowing from the combustors are generally directed over and around the airfoil of the turbine bucket. Thus, to protect the part from high temperatures, the airfoil typically includes an airfoil cooling circuit configured to supply a cooling medium, such as air, throughout the airfoil in order to reduce the temperature differential between the pressure and suction sides of the airfoil. In addition, the airfoil may have a cooling scheme or arrangement for supplying air to the pressure side surface and/or the suction side surface of the airfoil.

Currently, the surfaces of bucket airfoils are cooled using a series of straight, film holes defined through such surfaces. Specifically, the film holes are drilled straight through the airfoil surface(s) and into the airfoil cooling circuit to permit the air flowing through the cooling circuit to be supplied to the airfoil surface. However, it has been found that this cooling arrangement provides for less than optimal film cooling of the airfoil's surface. In particular, the film holes are typically relatively short and, thus, do not allow for a significant amount of heat transfer to occur between the cooling medium supplied through the film holes and the interior walls of the airfoil. Additionally, because the film holes are drilled straight into the airfoil, the exit angle of the cooling medium expelled from the holes can be relatively high, thereby negatively impacting flow attachment of the cooling medium against the surface of the airfoil.

Accordingly, an arrangement for an airfoil of a turbine component which provides enhanced cooling of the interior and/or surfaces of the airfoil would be welcomed in the technology.

### BRIEF DESCRIPTION OF THE INVENTION

Aspects and advantages of the invention will be set forth in part in the following description, or may be obvious from the description, or may be learned through practice of the invention.

In one aspect, the present invention resides in a turbine component comprising an airfoil having a base and a tip disposed opposite the base. The airfoil may further include a pressure side surface and a suction side surface extending between a leading edge and a trailing edge. An airfoil circuit may be at least partially disposed within the airfoil and may be configured to supply a medium through the airfoil. The turbine component may also include a curved passage defined in the airfoil so as to be in flow communication with the airfoil circuit. Additionally, an outlet may be defined through the pressure side surface or the suction side surface of the airfoil. The outlet may be in flow communication with the curved passage and may have a cross-sectional area that is greater than a cross-sectional area of the curved passage.

In another aspect, the present invention resides in a method for forming an arrangement within a turbine component having an airfoil and an airfoil circuit. The method may generally include forming a curved passage in the airfoil such that the curved passage intersects a portion of the airfoil circuit and forming an outlet in a pressure side surface or a suction side surface of the airfoil, the outlet having a cross-sectional area that is greater than a cross-sectional area of the curved passage.

These and other features, aspects and advantages of the present invention will become better understood with reference to the following description and appended claims. The accompanying drawings, which are incorporated in and constitute a part of this specification, illustrate embodiments of the invention and, together with the description, serve to explain the principles of the invention.

### BRIEF DESCRIPTION OF THE DRAWINGS

Embodiments of the present invention will now be described, by way of example only, with reference to the accompanying drawings in which:
FIG. 1 illustrates a schematic depiction of one embodiment of a gas turbine;
FIG. 2 illustrates a perspective view of one embodiment of a turbine bucket having a plurality of curved passages and shaped outlets in accordance with aspects of the present subject matter;
FIG. 3 illustrates a cross-sectional view of the turbine bucket shown in FIG. 2 taken along line 3-3;
FIG. 4 illustrates a partial, front view of the turbine bucket shown in FIGS. 2 and 3 taken along line 4-4;
FIG. 5 illustrates a partial, front view of another embodiment of a turbine bucket having a plurality of curved passages and shaped outlets in accordance with aspects of the present subject matter;
FIG. 6 illustrates a perspective view of another embodiment of a turbine bucket having a plurality of curved passages and a common shaped outlet in accordance with aspects of the present subject matter;
FIG. 7 illustrates a cross-sectional view of the turbine bucket shown in FIG. 6 taken along line 7-7;
FIG. 8 illustrates a cross-sectional view of one embodiment of a turbulated passage in accordance with aspects of the present subject matter;
FIG. 9 illustrates a cross-sectional view of a turbine bucket airfoil, particularly illustrating one embodiment of a curved STEM electrode that may be utilized to simultaneously form a curved passage and a shaped outlet in accordance with aspects of the present subject matter; and
FIG. 10 illustrates a partial, cross-sectional view of one embodiment of a turbine bucket airfoil having a straight passage defined between a curved passage and a shaped outlet in accordance with aspects of the present subject matter.

### DETAILED DESCRIPTION OF THE INVENTION

Reference now will be made in detail to embodiments of the invention, one or more examples of which are illustrated in the drawings. Each example is provided by way of explanation of the invention, not limitation of the invention. In fact, it will be apparent to those skilled in the art that various modifications and variations can be made in the present invention without departing from the scope or spirit of the invention. For instance, features illustrated or described as part of one embodiment can be used with another embodiment to yield a still further embodiment. Thus, it is intended that the present invention covers such modifications and variations as come within the scope of the appended claims and their equivalents.

Generally, the present subject matter is directed to a cooling arrangement for an airfoil of a turbine component. In particular, the present subject matter is directed to a turbine component airfoil having a plurality of curved passages for supplying a medium (e.g., a cooling medium) to the surfaces of the airfoil and one or more shaped outlets for expelling the medium onto such surfaces. By forming curved passages within the airfoil as opposed to straight cooling holes, it has been found that the convective cooling path provided within the airfoil may be increased, thereby enhancing heat transfer between the medium flowing through the curved passages and the interior of the airfoil. Additionally, by appropriately selecting the radius of curvature of the curved passages, the exit angle of the shaped outlets may be reduced, thereby enhancing flow attachment of the medium against the surfaces of the airfoil.

The curved passages and shaped outlets of the present subject matter will generally be described herein with reference to a turbine bucket of a gas turbine. However, it should be readily appreciated by those of ordinary skill in the art that the disclosed curved passages and shaped outlets may generally be defined in any turbine component having an airfoil. Thus, for example, the curved passages and outlets may also be defined in turbine nozzles and compressor blades of a gas turbine. Additionally, application of the present subject matter need not be limited to gas turbines, but may also be utilized in steam turbines. Further, it should be appreciated that the curved passages and shaped outlets may be defined in the components of turbines used for power generation, as well as those used in aviation for propulsion.

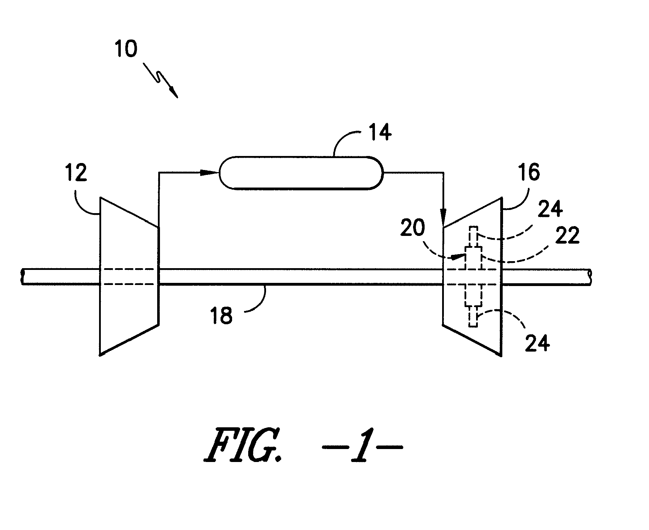

Referring now to the drawings, FIG. 1 illustrates a schematic diagram of a gas turbine 10. The gas turbine 10 generally includes a compressor section 12, a plurality of combustors (not shown) disposed within a combustor section 14, and a turbine section 16. Additionally, the gas turbine 10 may include a shaft 18 coupled between the compressor section 12 and the turbine section 16. The turbine section 16 may generally include a turbine rotor 20 having a plurality of rotor disks 22 (one of which is shown) and a plurality of turbine buckets 24 extending radially outwardly from and being coupled to each rotor disk 22 for rotation therewith. Each rotor disk 22 may, in turn, be coupled to a portion of the shaft 18 extending through the turbine section 16.

During operation of the gas turbine 10, the compressor section 12 supplies compressed air to the combustors of the combustor section 14. Air and fuel are mixed and burned within each combustor and hot gases of combustion flow in a hot gas path from the combustor section 14 to the turbine section 16, wherein energy is extracted from the hot gases by the turbine buckets 24. The energy extracted by the turbine buckets 24 is used to rotate to the rotor disks 22 which may, in turn, rotate the shaft 18. The mechanical rotational energy may then be used to power the compressor section 12 and generate electricity.

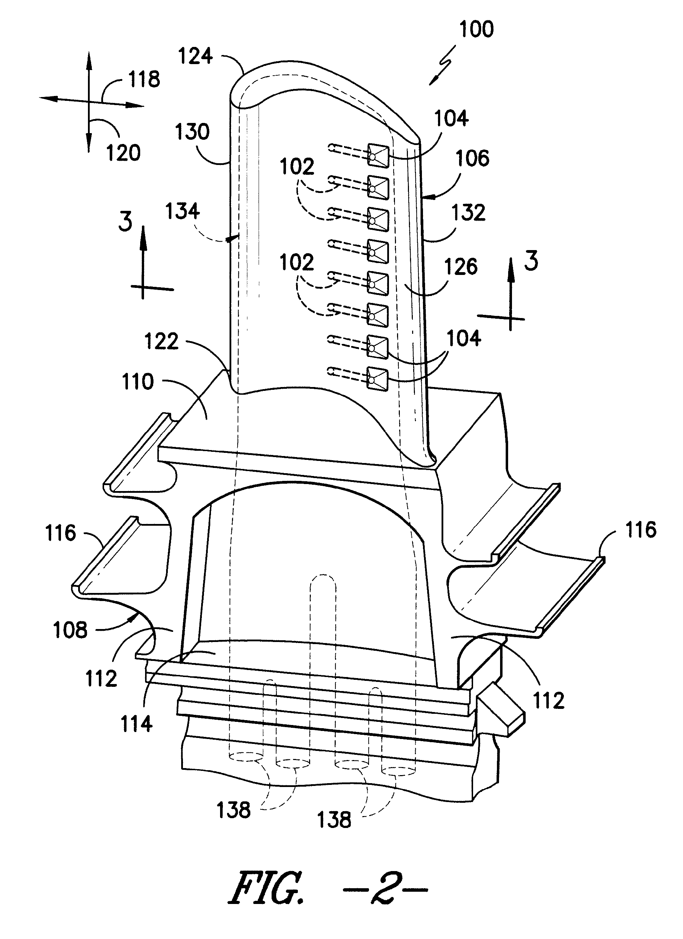

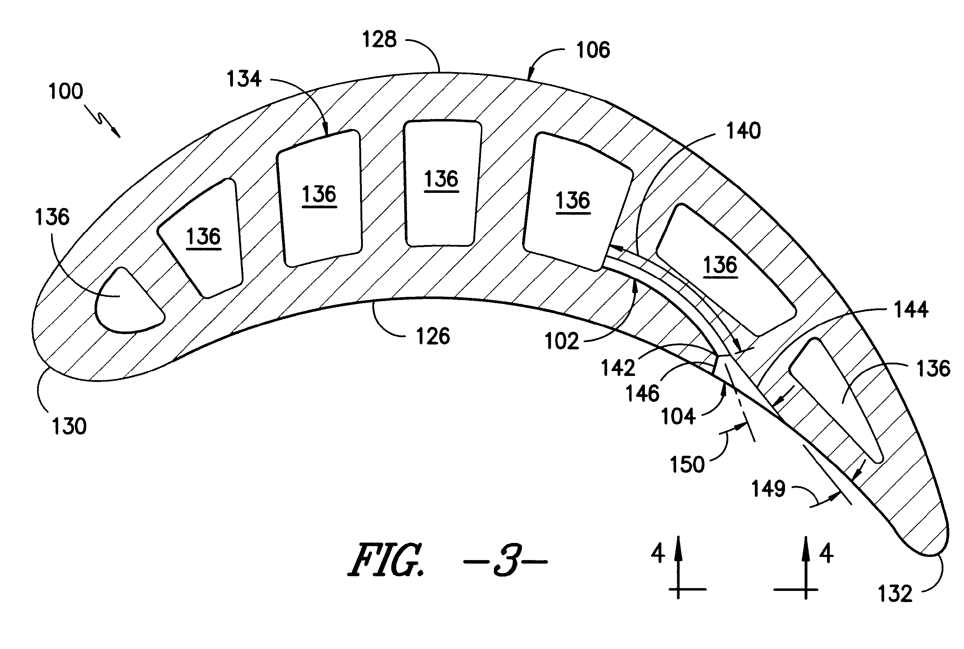

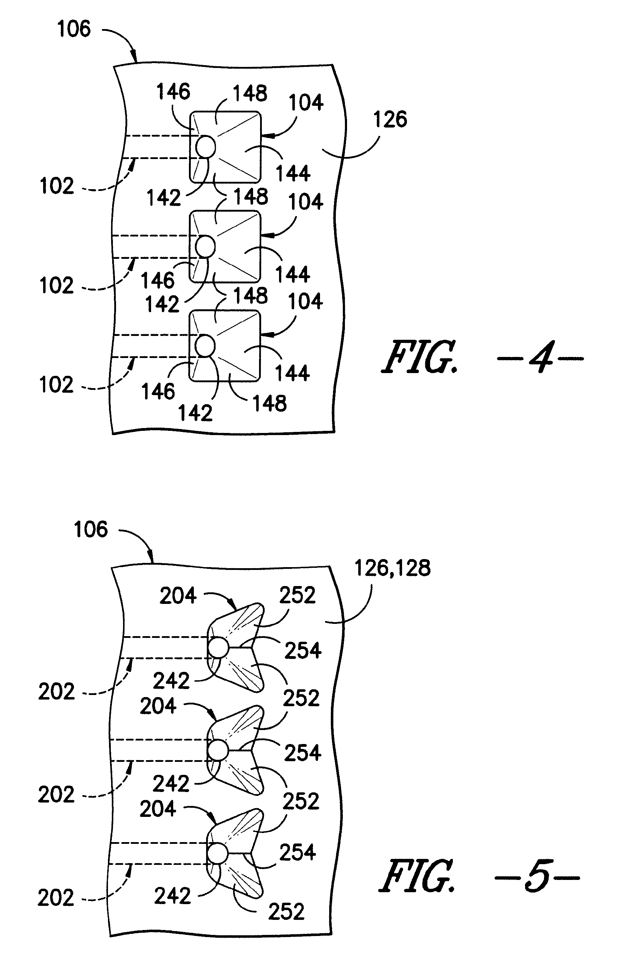

Referring now to FIGS. 2-4, one embodiment of a turbine bucket 100 having a plurality of curved cooling passages 102 and shaped outlets 104 is illustrated in accordance with aspects of the present subject matter. In particular, FIG. 2 illustrates a perspective view of the turbine bucket 100. FIG. 3 illustrates a cross-sectional view of the airfoil 106 of the turbine bucket 100 taken along line 3-3. Additionally, FIG. 4 illustrates a partial, front view of the airfoil 106 taken along line 4-4.

As shown, the turbine bucket 100 generally includes a shank portion 108 and an airfoil 106 extending from a substantially planar platform 110. The platform 110 generally serves as the radially inward boundary for the hot gases of combustion flowing through the turbine section 16 of the gas turbine 10 (FIG. 1). The shank portion 108 of the bucket 100 may generally be configured to extend radially inwardly from the platform 110 and may include sides 112, a hollow cavity 114 partially defined by the sides 112 and one or more angel wings 116 extending in an axial direction 118 from each side 112. The shank portion 108 may also include a root structure (not illustrated), such as a dovetail, configured to secure the bucket 100 to the rotor disk 20 of the gas turbine 10 (FIG. 1).

The airfoil 106 may generally extend outwardly in the radial direction 120 from the platform 110 and may include an airfoil base 122 disposed at the platform 110 and an airfoil tip 124 disposed opposite the airfoil base 122. Thus, the airfoil tip 124 may generally define the radially outermost portion of the turbine bucket 100. The airfoil 106 may also include a pressure side surface 126 and a suction side surface 128 (FIG. 3) extending between a leading edge 130 and a trailing edge 132. The pressure side surface 126 may generally comprise an aerodynamic, concave outer surface of the airfoil 106. Similarly, the suction side surface 128 may generally define an aerodynamic, convex outer surface of the airfoil 106.

Additionally, the turbine bucket 100 may also include an airfoil cooling circuit 134 extending radially outwardly from the shank portion 108 for flowing a medium, such as a cooling medium (e.g., air, water, steam or any other suitable fluid), throughout the airfoil 106. In general, it should be appreciated that the airfoil circuit 134 may have any suitable configuration known in the art. For example, as shown in the illustrated embodiment, the airfoil circuit 134 includes a plurality of channels 136 (FIG. 3) extending radially outwardly from one or more medium supply passages 138 to an area of the airfoil 106 generally adjacent to the airfoil tip 124. Specifically, as shown in FIG. 3, the airfoil circuit 134 includes seven radially extending channels 136 configured to flow the medium supplied from the supply passages 138 throughout the airfoil 106. However, one of ordinary skill in the art should appreciate that the airfoil circuit 134 may include any number of channels 136. Additionally, it should be appreciated that, although the channels 136 are shown in FIG. 3 as separate channels, the channels 136 may also be in flow communication with one another. For example, the airfoil circuit 134 may be configured as a multiple-pass cooling circuit and may include a plurality of interconnected channels 136 extending radially inward and radially outward within the airfoil 106. Specifically, in one embodiment, the channels 136 may define a serpentine-like path such that the medium within the channels 136 flows alternately radially outwardly and radially inwardly throughout the airfoil 106.

Referring still to FIGS, 2 and 3, as indicated above, the turbine bucket 100 may also include a plurality of curved cooling passages 102 and a plurality of corresponding shaped outlets 104 defined in the airfoil 106. In general, the curved passages 102 may be configured to supply a portion of the medium flowing through the airfoil circuit 134 to the shaped outlets 104 defined through the pressure side surface 126 and/or the suction side surface 128 of the airfoil 106. Thus, in several embodiments, each of the curved passages 102 may generally be in flow communication with a portion of the airfoil circuit 134 at one end and in flow communication with one of the shaped outlets 104 at the opposing end. For example, as shown in the illustrated embodiment, the shaped outlets 104 are defined through the pressure side surface 126 of the airfoil 106. Thus, each of the curved passages 104 may be configured to extend within the airfoil 106 between one of the channels 136 of the airfoil circuit 134 and one of the shaped outlets 104. As such, the medium flowing through the channel(s) 136 may be directed through the curved passages 102 and subsequently expelled from the shaped outlets 104 onto the pressure side surface 126 to provide a means for cooling such surface and/or maintaining the temperature of such surface. As used herein, the term "curved" may refer to passages 102 having a constant radius of curvature between the airfoil circuit 134 and the shaped outlets 104 and/or passages 102 having a varying radius of curvature between the airfoil circuit 134 and the shaped outlets 104. Additionally, the term "curved" may refer to passages 102 that are non-linear (e.g., a passage formed from a plurality of short, straight sections that together define a curve).

In general, the curved passages 102 may be configured to have any suitable radius of curvature that permits the passages 102 to function as described herein. For example, in several embodiments, the radius of curvature of the curved passages 102 may be selected such that an arc length 140 of each passage 102 is longer than that of conventional cooling holes drilled straight into one of the channels 136 of the airfoil circuit 134. As such, the curved passages 102 may provide a longer convective cooling path within the airfoil 106 than conventional cooling holes, thereby allowing for a greater amount of heat transfer to occur between the walls of the airfoil 106 and the medium as it flows through the curved passages 102.

Additionally, the curved passages 102 and corresponding shaped outlets 104 may generally be defined in the airfoil 106 in any suitable arrangement and/or pattern that provides for effective cooling of the interior and exterior of the airfoil 106. For example, as shown in FIG. 2, the curved passages 102 and shaped outlets 104 may be formed in the airfoil 106 such that the pairs of curved passages 102 and shaped outlets 104 are spaced apart radially from one another, thereby forming a radially extending row of curved passages 102 and shaped outlets 104 between the airfoil tip 124 and the airfoil base 122. As such, the medium flowing through each of the curved passages 102 may provide enhanced, convective cooling of the interior of the airfoil 106 between the tip 124 and the base 122. Additionally, the medium expelled from the shaped outlets 104 may provide a blanket of film cooling medium along the pressure side surface 126 between the tip 124 and the base 122. However, it should be appreciated that, in alternative embodiments, the pairs of curved passages 102 and shaped outlets 104 may have any other suitable arrangement, such as by being spaced apart axially from one another or by being randomly formed in the airfoil 106.

Moreover, as shown in the illustrated embodiment, the curved passages 102 may have a planar orientation within the airfoil 106 and may generally extend axially within the airfoil 106 between the airfoil circuit 134 and the shaped outlets 104. As such, the curved passages 102 may be oriented substantially parallel to the horizontal plane defined by the airfoil base 122 and/or the airfoil tip 124. However, in other embodiments, the curved passages 102 may be angled radially within the airfoil 106 relative to the airfoil base 122 and/or the airfoil tip 124.

Referring still to FIGS. 2-4, the shaped outlets 104 may generally be defined in airfoil 106 such that at least a portion of the cross-sectional area of each shaped outlet 104 is greater than the cross-sectional area of its corresponding curved passage 102. Thus, in several embodiments, the shaped outlets 104 may be diffuser-shaped, with the cross-sectional area of each shaped outlet 104 diverging outwardly from a transition point 142 defined between each curved passage 102 and shaped outlet 104. For example, as shown in FIGS. 3 and 4, the shaped outlets 104 may have a generally rectangular cross-sectional shape with walls 144, 146, 148 configured to taper outwardly from the transition point 142. Specifically, each shaped outlet 104 may include a forward wall 144 having an extended taper in the downstream or flow path direction of the medium (i.e., axially in the direction of the trailing edge 132 of the airfoil 106) and a back wall 146 having a sharply angled taper in the upstream or counter flow path direction of the medium (i.e., axially in the direction of the leading edge 130 of the airfoil 106). In addition, the shaped outlets may also include side walls 148 tapering outwardly from the transition point 142. As a result, the medium directed through the curved passages 102 may expand outwardly as it flows from the passages 102 to the shaped outlets 104. In particular, the tapered forward and back walls 144, 146 may permit the medium to expand axially, while the tapered side walls 148 may permit the medium to expand radially, thereby reducing the velocity and increasing the pressure of the medium. Such reduced velocity may, in turn, provide enhanced flow attachment against the pressure side surface 126 as the medium exits each shaped outlet 104.

Further, as particularly shown in FIG. 3, the forward wall 144 of each of the shaped outlets 104 may be formed in the airfoil 106 such that an exit angle 149 is defined between the shaped outlets 104 and the pressure side surface 126. In several embodiments, the exit angle 149 may be relatively shallow in order to further enhance flow attachment of the medium against the pressure side surface 126 as it is expelled from the shaped outlets 104. For example, in one embodiment, the exit angle 149 may be less than about 20 degrees, such as less than about 15 degrees or less than about 10 degrees or less than about 5 degrees. It should be appreciated that such shallow exit angles 149 may be achieved due, at least in part, to the curvature of the curved passages 102. For instance, in several embodiments, the radius of curvature of the curved passages 102 may be chosen such that a transition angle 150 of each passage 102 (defined at the transition point 142) relative to the pressure side surface 126 is minimized. Thus, by reducing the transition angle 150 between the curved passages 102 and the shaped outlets 104, the exit angle 149 may be correspondingly reduced without inhibiting flow attachment.

It should be appreciated that, in alternative embodiments, the shaped outlets 104 need not have the exact shape shown in FIGS. 2-4 but may generally have any other suitable shape adapted to provide effective film cooling to one or more of the surfaces 126, 128 of the airfoil 106. For example, FIG. 5 illustrates a partial, front view of the bucket airfoil 106 shown in FIGS. 2-4 having another embodiment of shaped outlets 204 defined therein in accordance with aspects of the present subject matter. As shown, the shaped outlets 204 are chevron-shaped (i.e., generally V-shaped) and, thus, may be configured to diverge outwardly from the transition point 242 defined between the curved passages 202 and the shaped outlets 204. Specifically, each shaped outlet 204 may include a pair of tapered recesses 252 separated by a common apex or ridge 254 extending axially along the center of the shaped outlet 204. The tapered recesses 252 may generally be configured to diverge both axially in the downstream or flow path direction of the medium and radially in the direction of adjacent shaped outlets 204. As such, the velocity of the medium flowing through the shaped outlets 204 may be reduced as the corresponding pressure is increased, thereby enhancing flow attachment against the surface 126, 128 of the airfoil 106. In addition, similar to the shaped outlets 104 described above, the axial divergence of the tapered recesses 252 may be configured such that a relatively shallow exit angle 149 (FIG. 3) is defined between the recesses 252 and the surface 126, 128 of the airfoil 106 in order to further enhance flow attachment.

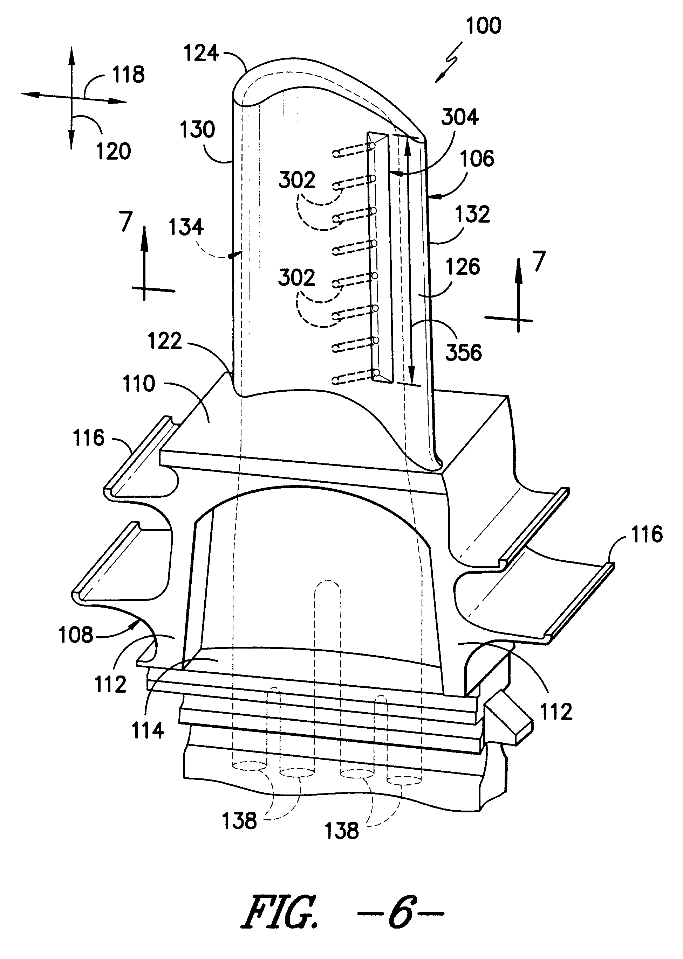

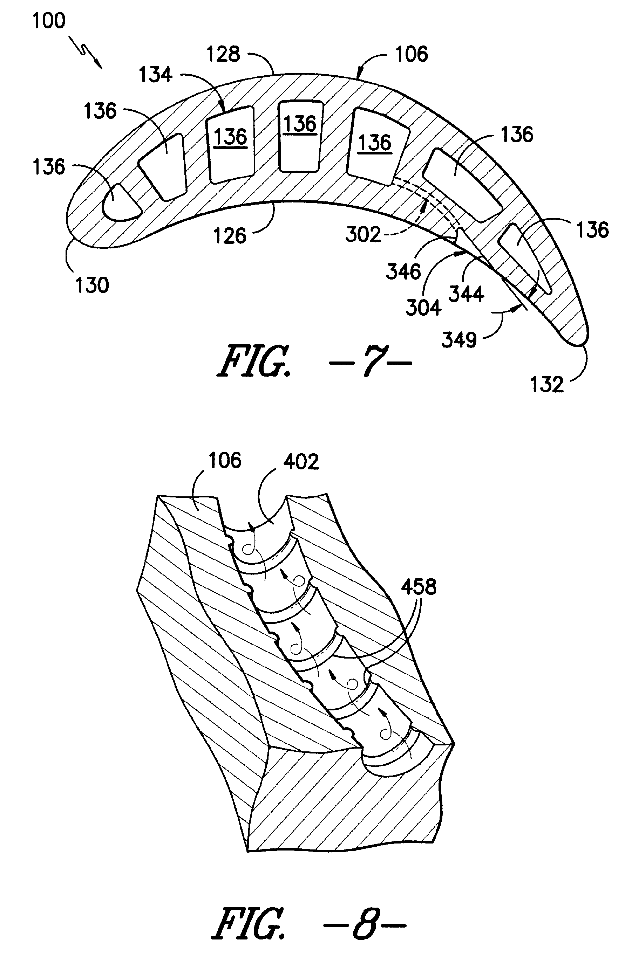

Referring now to FIGS. 6 and 7, another embodiment of the turbine bucket 100 shown in FIG. 2 is illustrated having a plurality of curved passages 302 and a common shaped outlet 304 defined the bucket's airfoil 106 in accordance with aspects of the present subject matter. In particular, FIG. 6 illustrates a perspective view of the turbine bucket 100. Additionally, FIG. 7 illustrates a cross-sectional view of the airfoil 106 taken along line 7-7.

In general, the curved passages 302 may be configured similarly to the curved passages 102, 202 described above with reference to FIGS. 2-5. For example, each of the curved passages 302 may be defined in the airfoil 106 so as to be in flow communication within one of the channels 136 of the airfoil circuit 134. As such, the medium flowing through the channel(s) 136 may be directed into each of the curved passages 302. However, unlike the curved passages 102, 202 described above, each of the curved passages 302 is configured to terminate at a common shaped outlet 304 defined through the pressure side surface 126 or the suction side surface 128 of the airfoil 106. For example, as shown in FIG. 6, the common shaped outlet 304 may comprise a trench or channel defined in the pressure side surface 126 and extending radially between airfoil base 122 and the airfoil tip 124. Thus, the medium flowing through each of the curved passages 302 may be directed into the common shaped outlet 304 and may be subsequently expelled from the shaped outlet 304 onto the pressure side surface 126. Alternatively, shaped outlets similar to the shaped outlets 104, 204 described above with reference to FIGS. 4 and 5 may be formed in the airfoil 106 between each curved passage 302 and the common shaped outlet 304.

In general, the common shaped outlet 304 may generally have any suitable radial length 356 within the airfoil 106 that allows each of the curved passages 302 to be in flow communication with the outlet 304. For example, in the illustrated embodiment, the curved passages 302 are defined in the airfoil 106 so as to be spaced apart in a row extending generally from the airfoil base 122 to the airfoil tip 124. Thus, the common shaped outlet 304 may be configured to extend radially from the airfoil base 122 to the airfoil tip 124. However, in other embodiments, the common shaped outlet 304 may be configured to extend radially only partially between the airfoil base 122 to the airfoil tip 124.

Additionally, it should be appreciated that the common shaped outlet 304 may generally have any suitable shape and/or configuration that permits the medium expelled from the outlet 302 to effectively cool the surface 126 of the airfoil 106. For example, as particularly shown in FIG. 7, in one embodiment, the common shaped outlet 304 may have a diffuser shape similar to the shaped outlets 104 described above with reference to FIGS. 2-4. In particular, the common shaped outlet 304 may include a forward wall 344 having an extended taper in the downstream or flow path direction of the medium (i.e., axially in the direction of the trailing edge 132 of the airfoil 106) and a back wall 346 having a sharply angled taper in the upstream or counter flow path direction of the medium (i.e., axially in the direction of the leading edge 130 of the airfoil 106). As a result, the medium directed through the curved passages 302 may expand axially and radially as it flows into the common shaped outlet 304. Thus, the velocity of the medium may be reduced and its pressure may be increased, thereby enhancing flow attachment against the surface 126 of the airfoil 106. Additionally, similar to the shaped outlets 104 described above, the forward wall 344 of the common shaped outlet 304 may be formed in the airfoil 106 such that a relatively shallow exit angle 349 is defined between the outlet 304 and the pressure side surface 126 in order to further enhance flow attachment. However, it should be appreciated that, in alternative embodiments, the common shaped outlet 304 may have any other suitable shape known in the art.

Additionally, in the illustrated embodiment, each of the curved passages 302 has an angled orientation within the airfoil 106. For example, as particularly shown in FIG. 6, each of the curved passages 302 is angled radially outwardly as it extends between the airfoil circuit 134 and the common shaped outlet 304. However, in other embodiments, the curved passages 302 may be angled radially downwardly between the airfoil circuit 132 and the common shaped outlet 304. Alternatively, similar to the embodiments described above with reference to FIGS. 2-5, the curved passages 302 may be defined in the airfoil 106 so as to extend axially between the airfoil circuit 134 and the common shaped outlet 304.

In general, it should be appreciated that the curved passages 102, 202, 302 described herein may be formed within the airfoil 106 using any suitable means known in the art. For example, the curved passages 102, 202, 302 may be formed using an electrical discharge machining ("EDM") process or a casting process. Alternatively, the curved passages 102, 202, 302 may be formed using a curved shaped-tube electrochemical machining ("STEM") process. The curved STEM process is generally disclosed in application Ser. No. 12/562,528 Curved Electrode and Electrochemical Machining Method and Assembly Employing the Same filed on September 18, 2009 and assigned to the General Electric Company. Generally, unlike a conventional STEM drilling process, the curved STEM process utilizes a curved STEM electrode operatively connected to a rotational driver. The rotational driver is configured to move the electrode along a curved path within an object to be machined, such as a bucket airfoil 106. As the rotational driver rotates the curved electrode along the curved path, a pulsed voltage supplied to the electrode from a power source allows portions of the object to be machined to be electroeroded away to define a curved passage within the object.

It should also be appreciated that the curved passages 102, 202, 302 of the present subject matter may be formed in the airfoil 106 so as to have any suitable cross-sectional shape. For example, in the illustrated embodiments, the curved passages 102, 202, 302 generally have a circular cross-section. However, in alternative embodiments, the curved passages 102, 202, 302 may have an elliptical, flattened, rectangular or any other suitable non-circular cross-section depending on the desired cooling performance of the passages 102, 202, 302. Additionally, the cross-sectional area of each curved passage 102, 202, 302 may remain constant or may be varied along the length of the passage 102, 202, 302. For instance, the size of the tooling used to form the curved passages 102, 202, 302 may be changed during the manufacturing process to alter the cross-sectional area of the passages 102, 202, 302. Thus, in one embodiment, a particular sized curved STEM electrode may be used to form a first section of a curved passage 102, 202, 302 and then a smaller sized curved STEM electrode may be used to form the remainder of the passage 102, 202, 302.

Moreover, in a particular embodiment of the present subject matter, the curved passages 102, 202, 302 may be turbulated along their length. As used herein, the term "turbulated" means that the surface of the curved passages 102, 202, 302 may have grooves, ridges, or may otherwise have periodic surface contouring so as to introduce turbulence into the flow of the medium. Thus, for example, a cross-sectional view of one embodiment of a turbulated passage 402 is illustrated in FIG. 8. As shown, the turbulated passage 402 includes ridges 458 formed along its length to create turbulence in the medium flow. This turbulence may enhance the cooling performance of the passage 402 by increasing heat transfer between the medium and the airfoil 106. It should be appreciated that the ridges 458 need not have the exact shape and configuration as depicted in FIG. 8, but may generally have any shape and/or configuration designed to create turbulence in the medium flow. Thus, in alternative embodiments, the ridges 458 may have a substantially square profile and/or may be formed so as to project into the airfoil 106 instead of into the passage 402. It should also be appreciated that the ridges, grooves, or other periodic surface contouring may be formed in the surface of the passage 402 by any means generally known in the art. For example, ridges and/or grooves may be formed by varying the tool feed rate of the tool used to form the passage 402. Alternatively, in another embodiment, a curved STEM electrode used in the curved STEM process may only be partially covered with an insulating coating, thereby exposing sections of the electrically conductive portion of the electrode to the surface of the passage 402 to create surface contouring.

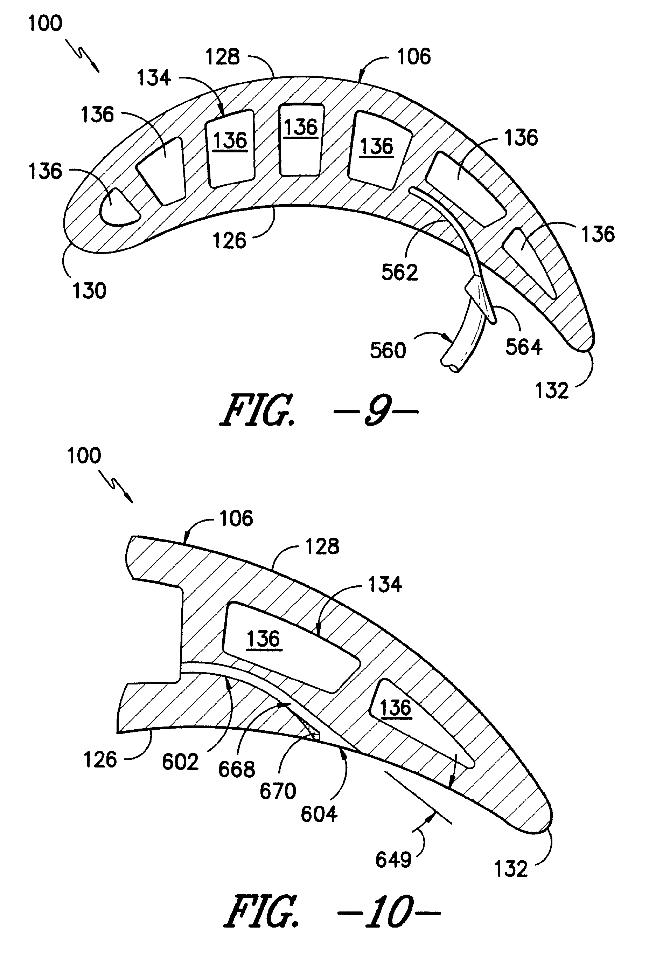

Additionally, it should be appreciated that the shaped outlet(s) 104, 204, 304 described herein may generally be formed within the airfoil 106 using any suitable means known in the art. For example, in several embodiments, the shaped outlet(s) 104, 204, 304 may be formed using a laser machining process, a water jet machining process, an EDM process, a curved STEM process and/or a casting process. Moreover, it should be appreciated that the shaped outlet(s) 104, 204, 304 may be formed before or after the curved passages 102, 202, 302 are formed within the airfoil 106. For instance, in one embodiment, the curved passages 102, 202, 302 may be initially formed in the airfoil 106 so as to extend between one the airfoil circuit 134 and the pressure side surface 126 or the suction side surface 128 of the airfoil 106. The shaped outlet(s) 104, 204, 304 may then be formed in the airfoil 106 at the location at which the curved passages 102, 202, 302 intersect the pressure side surface 126 or the suction side surface 128. Alternatively, each curved passage 102, 202, 302 and its corresponding outlet 104, 204, 304 may be formed in a single processing step. For example, FIG. 9 illustrates one embodiment of a curved STEM electrode 560 that may be utilized with the curved STEM process in simultaneously forming each curved passage 102, 202, 302 and its corresponding shaped outlet 104, 204, 304. As shown, the curved STEM electrode 560 may generally include a curved section 562 for forming each curved passage 102, 202, 302. For instance, the curved section 562 may be dimensioned, shaped and/or otherwise configured so as to correspond to the dimensions, shape and/or configuration of the curved passage 102, 202, 302 desired to be formed within the airfoil 106. In addition, the curved STEM electrode 560 may include a shaped projection 564 for forming the shaped outlet 104, 204, 304. In particular, the shaped projection 564 may be dimensioned, shaped and/or otherwise configured so as to correspond to the dimensions, shape and/or configuration of the desired outlet 104, 204, 304 to be formed within the airfoil 106. Thus, as the curved STEM electrode 560 is moved within the airfoil 106, portions of the airfoil 106 may be electroeroded away by the curved section 562 and the shaped projection 564 to define the desired curved passage 102, 202, 302 and corresponding shaped outlet 104, 204, 304.

Referring now to FIG. 10, a, partial, cross-sectional view of a further embodiment of a bucket airfoil 106 is illustrated in accordance with aspects of the present subject matter. As shown, the airfoil 106 generally includes a curved cooling passage 602 and a shaped outlet 604 defined therein. In general, the curved passage 602 and shaped outlet 604 may be configured the same as or similar to the curved passages 102, 202, 302 and shaped outlets 104, 204, 304 described above. Additionally, the airfoil 106 includes a straight passage 668 defined between the curved passage 602 and the shaped outlet 604. As such, the medium flowing into the curved passage 602 from the airfoil circuit 134 may be directed through the straight passage 668 prior to being delivered to the shaped outlet 604 and subsequently expelled along the surface 126 of the airfoil 106. Such an embodiment may be desirable, for example, when the transition angle 150 (FIG. 3) of the curved passage 602 does not allow for the desired exit angle 649 between the shaped outlet 604 and the surface 126 of the airfoil 106 (e.g., when the transition angle 150 is too large). Thus, the straight passage 668 may be formed between the curved passage 602 and the shaped outlet 604 to reduce the transition angle 150 and enable the desired exit angle 649 to be achieved. In an alternative embodiment, the straight passage 608 may be used with the common outlet 304 described above with reference to FIGS. 6 and 7.

It should be appreciated that the straight passage 668 may be formed between the curved passage 602 and the shaped outlet 604 using any suitable means known in the art. However, in a particular embodiment of the present subject matter, the straight passage 668 may be formed after a portion of the curved passage 602 has been filled with a suitable coating 670. For example, the curved passage 602 may initially ne formed in the airfoil 106 between airfoil circuit 134 and the pressure side surface 126 using one of the processes described above. Subsequently, a coating 670 may be applied to the surface 126 of the airfoil 106, particularly in the area of the curved passage 602, in order to fill-in the portion of the curved passage 602 extending adjacent to the surface 126. For instance, the coating 670 may comprise a thermal barrier coating (e.g., an oxidation resistant metallic layer underlying a ceramic thermal barrier layer) applied using any suitable application process, such as a high velocity oxy-fuel (HVOF) spraying process, a vacuum plasma spraying (VPS) process, an air plasma spraying (APS) process and/or the like. Once the coating 670 is applied, the straight passage 668 may then be machined into the airfoil 106 using a laser machining process, a water jet machining process and/or any other suitable machining process. For example, as shown in the illustrated embodiment, a portion of the coating 670 may serve as a wall for the straight passage 668 upon formations the passage 669 within the airfoil 106. The shaped outlet 604 may then be formed in the airfoil 106 such that the medium directed through the curved passage 602 and the straight passage 668 may be effectively delivered to the surface 126 of the airfoil 106.

It should be appreciated that, although the disclosed curved passages 102, 202, 302, 602 and shaped outlets 104, 204, 304, 604 are described and illustrated herein as being formed along and/or through the pressure side surface 126 of the airfoil 106 at a location proximal to the trailing edge 130 of the airfoil 106, the curved passages 102, 202, 302, 602 and outlets 104, 204, 304, 604 may generally be formed at any suitable location on and/or within the airfoil 106. For example, the curved passages 102, 202, 302, 602 may be formed in the airfoil 106 so at to extend between the airfoil circuit 134 and one or more shaped outlets 104, 204, 304, 604 defined through the suction side surface 128 of the airfoil 106. Similarly, the shaped outlets 104, 204, 304, 604 may be defined at any suitable location around the outer perimeter of the airfoil 106, such as at a location proximal to the leading edge 130 of the airfoil 106.

It should also be appreciated that, although the disclosed airfoil 106 is depicted as including only a single row of curved passages 102, 202, 302, 602 and shaped outlet(s) 104, 204, 304, 604 extending radially between the airfoil base 122 and airfoil tip 124, the airfoil 106 may generally include any number of rows of curved passages 102, 202, 302, 602 and shaped outlet(s) 104, 204, 304, 604 spaced apart around the outer perimeter of the airfoil 106.

Moreover, it should be appreciated that, in a particular embodiment of the present subject matter, the disclosed curved passages 102, 202, 302, 602 may be supplied a medium from a medium source other than the airfoil circuit 134. For example, the hollow cavity 114 of the shank portion 108 may be pressurized with a medium, such as air, to prevent combustion products flowing in the hot gas path from being ingested between turbine buckets 100. In such case, a supply passage (not shown) may be defined through the platform 110 and may extend radially outwardly therefrom to permit the medium disposed within the cavity 114 to be supplied to the curved passages 102, 202, 302, 602.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they include structural elements that do not differ from the literal language of the claims, or if they include equivalent structural elements with insubstantial differences from the literal languages of the claims.

## Claims

1. A turbine component comprising:
an airfoil (106) including a base (122) and a tip (124) disposed opposite the base (122), the airfoil (106) further including a pressure side surface (126) and a suction side surface (128) extending between a leading edge (130) and a trailing edge (132);
an airfoil circuit (134) at least partially disposed within the airfoil (106), the airfoil circuit (134) being configured to supply a medium through the airfoil (106); and
a curved passage (102) defined in the airfoil (106), the curved passage (102) being in flow communication with the airfoil circuit (134); and
an outlet (104) defined through the pressure side surface (126) or the suction side surface (128), the outlet (104) being in flow communication with the curved passage (102) and having a cross-sectional area that is greater than a cross-sectional area of the curved passage (102).

2. The turbine (10) component of claim 1, wherein the outlet (104, 204, 304, 604) is defined in the airfoil (106) so as to diverge outwardly from the curved passage (102, 202, 302, 602) in the direction of the pressure side surface (126) or the suction side surface (128).

3. The turbine component of claim 1 or 2, wherein the outlet (104) has one of a diffuser shape or a chevron shape.

4. The turbine component of any of claims 1 to 3, wherein the airfoil circuit (134) comprises a plurality of channels (136), the curved passage (102) being in flow communication with at least one of the plurality of channels (136).

5. The turbine component of any of claims 1 to 4, wherein the curved passage (102) extends axially within the airfoil (106) generally parallel to at least one of the base (122) and the tip (124).

6. The turbine component of any preceding claim, wherein the curved passage (102) is angled radially within the airfoil (106).

7. The turbine component of any preceding claim, further comprising a straight passage (668) defined in the airfoil (106) between the curved passage (102) and the outlet (104).

8. The turbine component of any preceding claim, wherein the curved passage (102) is turbulated along its length.

9. The turbine component of any preceding claim, further comprising a plurality of curved passages (102) defined in the airfoil (106) and a plurality of outlets (104) defined through at least one of the pressure side surface (126) and the suction side surface (128), each of the plurality of outlets (104) being in flow communication with one of the plurality of curved passages (102).

10. The turbine component of claim 9 wherein the plurality of outlets (104) is aligned in a row extending radially at least partially between the base (122) and the tip (124) of the airfoil (106).

11. The turbine component of claim 9 or 10, wherein the outlet (104) comprises a common outlet (304) extending radially at least partially between the base (122) and the tip (124) of the airfoil (106), each of the plurality of curved passages (102) being in flow communication with the common outlet (304).

12. The turbine component of any preceding claim, wherein the turbine (10) component comprises a turbine bucket (100).

13. A method for forming an arrangement within a turbine component having an airfoil (106) and an airfoil circuit (134), the airfoil (106) having a pressure side surface (126) and a suction side surface (128), the method comprising:
forming a curved passage (102) in the airfoil (106) such that the curved passage (102) intersects a potion of the airfoil circuit (134);
forming an outlet (104) in the pressure side surface (126) or the suction side surface (128) having a cross-sectional area that is greater than a cross-sectional area of the curved passage (102).

14. The method of claim 13, wherein forming the curved passage (102) in the airfoil (106) comprises moving a curved section (562) of an electrode (560) through a portion of the airfoil (106).

15. The method of claim 13 or 14, wherein forming the outlet (104) in the pressure side surface (126) or the suction side surface (128) comprises moving a shaped projection (564) of the electrode (560) through the pressure side surface (126) or the suction side surface (128).

16. The method of any of claims 13 to 15, further comprising forming a straight passage (668) in the airfoil (106) between the curved passage (102) and the outlet (104).
